# DEMANDE DE BREVET EUROPEEN

(11) **EP 4 432 499 A1**
(43) Date de publication de la demande: **18.09.2024**
(21) Numéro de dépôt: 24161651.5
(22) Date de dépôt: 06.03.2024
(51) Int. Cl.: H02H 7/30, H02H 1/00, H02H 3/30

(54) **PROCÉDÉ ET SYSTÈME DE PROTECTION D'UN RÉSEAU DE DISTRIBUTION ÉLECTRIQUE COMPORTANT AU MOINS DEUX SOURCES D ÉNERGIE ÉLECTRIQUE**

(30) Priorité: 07.03.2023 FR 2302094
(71) Demandeur: SCHNEIDER ELECTRIC INDUSTRIES SAS, 92500 Rueil-Malmaison (FR)
(72) Inventeur: DODELIN, Denis, 38100 GRENOBLE (FR); PERRON, Patrick, 38430 MOIRANS (FR)
(74) Mandataire: Lavoix

(57) **Abrégé**

L'invention concerne un procédé et un système de protection d'un réseau de distribution électrique, le système comportant des sources (4, - 4₄) d'énergie électrique, des charges (6, - 6₄) et des dispositifs de protection (8₁-8₁₂), ayant chacun une temporisation de déclenchement nominale et étant configuré pour fournir des signaux de détection de présence et de sens d'un courant de défaut. Le système détermine des points de surveillance (P₁-P₁₂) et une condition de défaut associée à chaque point de surveillance directement connecté à plusieurs dispositifs de protection, définie par des règles relatives à la présence et au sens du courant de défaut détecté par chaque dispositif de protection du voisinage dudit point de surveillance, et lorsqu'une condition de défaut est validée, déclenche en priorité, avec une temporisation de déclenchement inférieure à la temporisation de déclenchement nominale, l'ouverture d'au moins un des dispositifs de surveillance (8₁-8₁₂) du voisinage dudit point de surveillance en défaut.

## Description

La présente invention concerne un procédé et un système de protection d'un réseau de distribution électrique comportant au moins deux sources d'énergie électrique.

L'invention se situe dans le domaine général de la protection des installations électriques, et plus particulièrement dans le domaine du déclenchement des dispositifs de protection dans des installations électriques, e.g. réseaux de distribution d'énergie électrique complexes.

De tels réseaux de distribution d'énergie électrique sont par exemple dédiés à un bâtiment, à usage domestique ou professionnel, il s'agit par exemple de réseaux électriques autonomes.

On considère en particulier le cas des réseaux de distribution d'énergie électrique multi-sources et multi-charges, les sources d'énergie électrique étant configurées pour fournir de l'électricité aux charges dans diverses situations, la circulation de courant pouvant être bidirectionnelle, c'est-à-dire à la fois dans un premier sens de circulation des sources vers les charges, et dans un deuxième sens de circulation des charges vers les sources.

Par exemple, les sources d'énergie électrique comprennent des générateurs, des transformateurs, certaines des sources étant par exemple des sources de secours, configurées pour fournir une énergie électrique et assurer la continuité de fourniture de l'énergie électrique en cas de défaillance d'une ou plusieurs sources d'énergie électriques utilisées à titre principal.

Un tel réseau de distribution d'énergie électrique est configuré pour alimenter un nombre quelconque de charges, par exemple au moyen de plusieurs barres de connexion ou répartiteurs de courant. De manière connue, des dispositifs de protection, également appelés disjoncteurs, sont connectés entre les sources et les charges, afin de protéger l'ensemble du réseau en cas de présence d'un défaut, notamment en présence d'un courant d'intensité supérieure à un seuil de courant de défaut.

La protection est indispensable pour préserver les différents équipements (sources et charges), et également pour éviter des risques de sécurité tels que le déclenchement d'incendie par exemple.

Les dispositifs de protection sont, de manière connue, configurés pour fournir un signal de détection d'un courant de défaut indiquant une présence ou une absence de défaut détecté sur un conducteur associé en fonction d'une amplitude de courant, et une indication du sens du courant de défaut.

Un des problèmes qui se posent dans un réseau de distribution d'énergie électrique du type décrit ci-dessus est le déclenchement judicieux des dispositifs de protection pour couper la circulation de courant électrique, en d'autres termes, passer d'un état fermé à un état ouvert, en évitant une coupure d'alimentation non nécessaire pour une partie du réseau. En effet, dans une architecture complexe des connexions entre la pluralité de sources et de charges, la détection d'un courant de défaut peut arriver simultanément au niveau de plusieurs dispositifs de protection, alors que le déclenchement de tous les dispositifs de protection n'est pas nécessaire. De plus, le déclenchement non nécessaire de certains dispositifs de protection induit une coupure de parties du réseau de distribution électrique qui ne sont pas en défaut, et une intervention de maintenance pour la remise en fonctionnement qui pourrait être évitée.

Par conséquent, il existe un besoin de sélection ou de priorisation du déclenchement du dispositif de protection à déclencher dans une telle architecture de connexion complexe, permettant de réaliser des coupures sélectives dans un intervalle temporel limité après détection d'un défaut, par exemple dans une limite de 200ms.

A cet effet, l'invention propose, selon un aspect, un procédé de protection d'un réseau de distribution électrique comportant au moins deux sources d'énergie électrique, au moins deux barres de connexion, une pluralité de charges à alimenter étant connectées respectivement à l'une ou l'autre des barres de connexion, des dispositifs de protection étant connectés, sur au moins un conducteur électrique entre les sources et les charges, le courant électrique circulant soit un premier sens de circulation de courant des sources vers les charges, soit selon un deuxième sens de circulation de courant des charges vers les sources, chaque dispositif de protection étant configuré pour passer d'un état fermé à un état ouvert, la circulation de courant électrique dans ledit au moins un conducteur étant coupée lorsque le dispositif de protection est à l'état ouvert, chaque dispositif de protection ayant une temporisation de déclenchement nominale et étant en outre configuré pour fournir un signal de détection d'un courant de défaut indiquant une présence ou absence de défaut détecté sur un conducteur associé en fonction d'une amplitude de courant, et une indication du sens du courant de défaut.

Ce procédé comporte :
la détermination d'une pluralité de points de surveillance dans le réseau de distribution, comprenant au moins un point de surveillance connecté directement à une pluralité de dispositifs de protection, formant un voisinage dudit point de surveillance,
pour chaque point de surveillance, la détermination d'une condition de défaut associée, ladite condition de défaut étant définie par une pluralité de règles relatives aux signaux indiquant la présence ou absence d'un défaut et l'indication de sens du courant associée de chaque dispositif de protection du voisinage dudit point de surveillance,
la surveillance d'une validation d'une condition de défaut, et lorsqu'une condition de défaut associée à un point de surveillance est validée, la déclenchement prioritaire, avec une temporisation de déclenchement inférieure à la temporisation de déclenchement nominale de l'ouverture d'au moins un des dispositifs de surveillance du voisinage dudit point de surveillance en défaut.

Avantageusement, le procédé proposé permet de réaliser une protection par déclenchement sélectif en fonction de règles relatives aux signaux de détection de défaut fournis par une pluralité de dispositifs de protection. Avantageusement, l'état d'une pluralité de conducteurs connectés à des sources et/ou à des charges est pris en considération pour optimiser la coupure sélective.

Le procédé de protection d'un réseau de distribution électrique selon l'invention peut présenter une ou plusieurs des caractéristiques ci-dessous, prises indépendamment ou selon toutes les combinaisons acceptables.

Lorsque la condition de défaut associée à un point de surveillance est validée, tous les dispositifs de protection du voisinage dudit point de surveillance qui alimentent en courant ledit point de surveillance sont déclenchés prioritairement.

Les règles sont implémentées sous forme de logique câblée, de manière à déclencher ledit au moins un dispositif de protection faisant partie du voisinage d'un point de surveillance lorsque l'ensemble des règles formant la condition de défaut associée audit point de surveillance est validé.

Pour un point de surveillance, au moins une règle associée à un dispositif de protection du voisinage combine la présence d'un défaut détecté avec un sens de défaut associé ou l'absence de défaut détecté.

L'absence de défaut détecté est également représentative d'un état d'ouverture dudit dispositif de protection.

Pour chaque point de surveillance, la condition de défaut associée est définie par les règles cumulatives suivantes: pour chacun des dispositifs de protection du voisinage dudit point de surveillance, il y a soit : la détection d'une présence de défaut, le sens du courant de défaut étant en direction dudit point de surveillance ou l'absence de détection de défaut.

Selon un autre aspect, l'invention concerne un système de protection d'un réseau de distribution électrique comportant au moins deux sources d'énergie électrique, au moins deux barres de connexion, une pluralité de charges à alimenter étant connectées respectivement à l'une ou l'autre des barres de connexion, des dispositifs de protection étant connectés, sur au moins un conducteur électrique entre les sources et les charges, le courant électrique circulant soit un premier sens de circulation du courant des sources vers les charges, soit selon un deuxième sens de circulation de courant des charges vers les sources, chaque dispositif de protection étant configuré pour passer d'un état fermé à un état ouvert, la circulation de courant électrique dans ledit au moins un conducteur étant coupée lorsque le dispositif de protection est à l'état ouvert, chaque dispositif de protection ayant une temporisation de déclenchement nominale et étant en outre configuré pour fournir un signal de détection d'un courant de défaut indiquant une présence ou une absence de défaut détecté sur un conducteur associé en fonction d'une amplitude de courant, et une indication du sens du courant de défaut.

Ce système étant configuré pour :
déterminer une pluralité de points de surveillance dans le réseau de distribution, comprenant au moins un point de surveillance connecté directement à une pluralité de dispositifs de protection, formant un voisinage dudit point de surveillance,
pour chaque point de surveillance, déterminer une condition de défaut associée, ladite condition de défaut étant définie par une pluralité de règles relatives aux signaux indiquant la présence ou absence d'un défaut et l'indication de sens du courant associée de chaque dispositif de protection du voisinage dudit point de surveillance,
surveiller une validation d'une condition de défaut, et lorsqu'une condition de défaut associée à un point de surveillance est validée, déclencher en priorité, avec une temporisation de déclenchement inférieure à la temporisation de déclenchement nominale, l'ouverture d'au moins un des dispositifs de surveillance du voisinage dudit point de surveillance en défaut.

Le système présente les avantages du procédé de protection d'un réseau de distribution électrique tel que décrit brièvement ci-dessus.

Le système de protection d'un réseau de distribution électrique selon l'invention peut présenter une ou plusieurs des caractéristiques ci-dessous, prises indépendamment ou selon toutes les combinaisons acceptables.

La surveillance de validation d'une condition de défaut est effectuée par une logique câblée, chaque dispositif de protection étant configuré pour vérifier une ou plusieurs conditions de défaut, chaque condition de défaut étant associée à un point de surveillance au voisinage duquel appartient ledit dispositif de protection.

Chaque dispositif de protection donné, appartenant à un voisinage d'un point de surveillance, reçoit en entrée, via des câbles de connexion, les signaux indicatifs de présence d'un courant de défaut et indicatifs du sens du courant de chaque autre dispositif de protection appartenant audit voisinage dudit point de surveillance, chacun desdits signaux étant un signal binaire.

Dans chaque dispositif de protection, la validation de la condition de défaut associée audit point de surveillance est implémentée, à partir desdits signaux binaires reçus en entrée, au moyen de relais internes du dispositif de protection.

Dans chaque dispositif de protection, la validation de la condition de défaut associée audit point de surveillance est implémentée de portes logiques.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 représente schématiquement un réseau de distribution électrique dans lequel est mis en oeuvre le système de protection selon l'invention;
[Fig 2] la figure 2 représente schématiquement le réseau de distribution électrique de la figure 1 enrichi de dispositifs faisant partie du système de protection ;
[Fig 3] la figure 3 est un synoptique d'un procédé de protection selon un mode de réalisation.

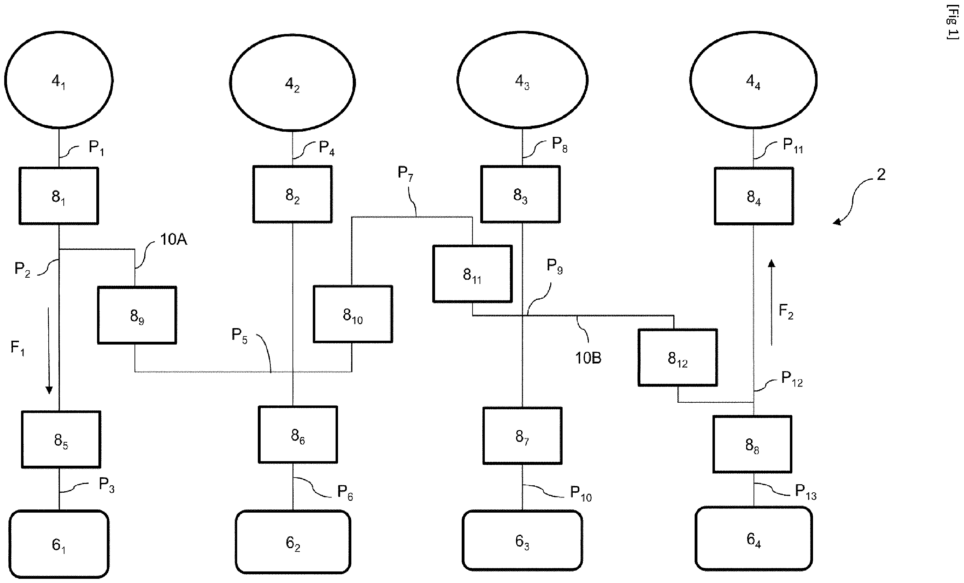

La figure 1 représente schématiquement un réseau de distribution électrique 2, décrit à titre d'exemple non-limitatif.

Le réseau 2 comporte des sources d'énergie électrique désignés par la référence générale 4, par exemple des générateurs, référencés respectivement 4₁, 4₂, 4₃, 4₄, et une pluralité de charges désignées par la référence générale 6, référencées 6₁, 6₂, 6₃, 6₄ dans la figure 1.

De manière générale, l'invention s'applique avec 2 ou plus de sources d'énergie électrique.

De manière simplifiée, seulement quatre charges sont représentées, mais bien entendu un nombre quelconque de charges peut être considéré, le nombre de charges alimenté par une des sources ne changeant pas la mise en oeuvre du procédé et du système de protection décrits ci-après.

Le réseau 2 comporte également des dispositifs de protection, également appelés disjoncteurs (en anglais « circuit breakers ») désignés par la référence générale 8, qui sont au nombre de 12 dans l'exemple illustré, référencés 8₁ à 8₁₂, connectés respectivement entre les sources et les charges, sur divers conducteurs électriques 10 de l'installation, qui sont sur des barres de conducteurs 10A, 10B dans l'exemple de la figure 1. Ainsi, le réseau de distribution électrique 2 est formé de 2 sous-réseaux dans cet exemple.

Les conducteurs électriques ont été représentés par un seul trait de manière schématique. Il est entendu que le système de protection s'applique pour un réseau de distribution électrique à N phases, par exemple en particulier pour le cas monophasé, ou triphasé, avec ou sans conducteur de neutre. Bien entendu, le nombre de conducteurs de phases est adapté en conséquence, la connexion des divers dispositifs étant adaptée en conséquence.

En particulier, à titre d'exemple, le système de protection s'applique dans le cas de générateurs triphasés 4₁, 4₂, 4₃, 4₄, et équilibrés, fournissant des signaux électriques de tension et de courant déphasés de 30°, pour une tension efficace de 690V.

Les dispositifs de protection sont référencés de 1 à 12 pour les distinguer dans l'explication.

Dans un mode de réalisation, les dispositifs de protection sont de même type.

Par exemple, dans un mode de réalisation, les dispositifs de protection sont des produits de type MasterPacT MTZ^{®} de Schneider Electric.

Dans le réseau de distribution d'électricité 2 , le courant circulant dans un premier sens, indiqué par la flèche F1, des sources vers les charges. En cas de défaut, une circulation du courant électrique dans un deuxième sens, indiqué par la flèche F2, est observée.

En pratique, on utilise aussi la terminologie sens direct pour le premier sens indiqué par la flèche F1 et sens inverse pour le deuxième sens indiqué par la flèche F2.

Chaque dispositif de protection 8 est configuré pour passer d'un état fermé (dans lequel le courant circule dans le conducteur 10 associé) à un état ouvert (dans lequel la circulation de courant dans le conducteur 10 associé est interrompue), par exemple sur commande ou sur validation d'une condition, fonction notamment de l'intensité du courant. Le passage de l'état fermé à l'état ouvert est également appelé déclenchement du dispositif de protection.

Chaque dispositif de protection 8 est configuré pour fournir un signal de détection d'un courant de défaut indiquant la présence de défaut sur un conducteur électrique auquel il est connecté, et une indication du sens du courant de défaut (i.e. sens direct ou sens inverse).

De plus, chaque dispositif de protection est configuré pour, dans son fonctionnement nominal, s'ouvrir pour couper le passage du courant électrique après l'écoulement d'une temporisation nominale (ou temporisation de déclenchement nominale) T₀ par exemple égale à 300ms, suite à la détection de présence d'un courant de défaut.

Dans un mode de réalisation, chaque dispositif de protection 8 est configuré pour fournir trois signaux binaires (ou signaux « tout ou rien », pouvant prendre deux valeurs) : un premier signal binaire indiquant la présence d'un courant de défaut, un deuxième signal binaire indiquant la présence d'un défaut dans le premier sens (ou « sens direct »), et un troisième signal binaire indiquant la présence d'un défaut dans le deuxième sens (ou « sens inverse »).

Une pluralité de points P₁ à P₁₃, dits points de surveillance de défauts, sont déterminés, pour assurer la surveillance de survenue de défauts et la protection sélective dans le réseau de distribution 2.

Les points de surveillance dans le réseau de distribution sont classés dans trois ensembles :
- Un premier ensemble des points des conducteurs électriques situés entre une source 4 et un dispositif de protection 8 :P₁, P₄, P₈, P₁₁ ;
- Un deuxième ensemble des points des conducteurs électriques situés entre une charge 6 et un dispositif de protection 8 : P₃, P₆, P₁₀, P₁₃ ;
- Un troisième ensemble des points des conducteurs électriques situés entre deux ou plus de dispositifs de protection : P₂, P₅, P₇, P₉ et P₁₂. En d'autres termes, ce sont des points d'interconnexion.

Les points de surveillance du troisième ensemble listé ci-dessus sont tels que chacun est connecté directement à plusieurs dispositifs de protection 8, qui forment un voisinage de ce point de surveillance.

Par exemple, dans le mode de réalisation de la figure 1 :
- pour le point P₂, le voisinage est formé des dispositifs de protection 8₁ ; 8₅ ; 8₉ ;
- pour le point P₅, le voisinage est formé des dispositifs de protection 8₂ ; 8₆ ; 8₉ et 8₁₀ ;
- pour le point P₇, le voisinage est formé des dispositifs de protection 8₁₀ et 8₁₁;
- pour le point P₉, le voisinage est formé des dispositifs de protection 8₃ ; 8₇ ; 8₁₁ et 8₁₂ ;
- pour le point P₁₂, le voisinage est formé des dispositifs de protection 8₄ ; 8s ; 8₁₂.

Les points de surveillance sont des points où un défaut électrique peut apparaître. Ils dépendent de l'architecture de connexion du réseau 2.

Le système de protection proposé propose une détermination de la présence de défauts aux points de surveillance, et, en cas de détection de présence d'un défaut, le déclenchement en priorité d'au moins un dispositif de protection associé qui est un des dispositifs de protection du voisinage du point de surveillance.

Par déclenchement en priorité on entend un déclenchement plus rapide que la durée de la temporisation nominale T₀.

Dans un mode de réalisation, tous les dispositifs de protection du voisinage du point de surveillance qui alimentent le défaut au point de surveillance sont déclenchés.

Avantageusement, le déclenchement plus rapide (ou en priorité) de ces dispositifs de protection permet de supprimer le défaut, donc de modifier la détection de défaut sur d'autres dispositifs de protection du réseau de distribution d'électricité. Cela permet d'éviter des déclenchements non nécessaires de dispositifs de protection, donc d'éviter une coupure électrique non nécessaire dans certaines parties du réseau.

Pour déterminer la présence d'un défaut en un point de surveillance, une condition de défaut est associée.

La condition de défaut est une condition multi-règles qui met en oeuvre une pluralité de règles relatives aux signaux fournis par les dispositifs de protection du voisinage

Dans le réseau de distribution électrique 2, en cas de survenue de défaut aux points de surveillance du premier ensemble de points P₁, P₄, P₈, P₁₁, la mise en oeuvre (e.g. le déclenchement) des dispositifs de protection 8₁, 8₂, 8₃ et 8₄ associés est préconisée.

Dans le réseau de distribution électrique 2, en cas de survenue de défaut aux points de surveillance du deuxième ensemble de points P₃, P₆, P₁₀, P₁₃, la mise en oeuvre (e.g. le déclenchement) des dispositifs de protection 8₅, 8₆, 8₇ et 8₈ associés est préconisée.

Pour les points de surveillance du troisième ensemble, qui sont des points d'interconnexion, connectés à au moins deux dispositifs de protection, la condition de défaut met en oeuvre une pluralité de règles relatives à la détection de défaut des dispositifs de protection du voisinage.

Les règles sont cumulatives, en d'autres termes la condition de défaut n'est validée que si toutes les règles sont vérifiées.

Avantageusement, en plus de la détection de présence d'un défaut par un des dispositifs de protection, l'absence de détection de défaut est également utilisée dans les règles. Cela permet notamment de traiter automatiquement les cas où une partie des sources 4₁ à 4₄, par exemple un générateur, est éteinte (état « off ») ou si le dispositif de protection est à l'état ouvert.

L'absence de détection de défaut se traduit par un signal de détection de défaut à zéro, par exemple le premier signal binaire est à zéro dans le mode de réalisation des dispositifs de protection décrit ci-dessus.

Pour chaque point de surveillance, la condition de défaut est définie par des règles cumulatives : pour chacun des dispositifs de protection du voisinage du point de surveillance, il y a soit : la détection d'une présence de défaut, dans le sens qui va vers le point de surveillance ou l'absence de détection de défaut.

A titre d'exemple, dans le réseau de distribution 2 illustre :

### Condition C1 de défaut associée à P₂ :

C11) -dispositif de protection 8₁ : présence de défaut dans le sens 1 ou absence de détection de défaut ;
C12) -dispositif de protection 8₉ : présence de défaut dans le sens 2 ou absence de détection de défaut ;
C13) - dispositif de protection 8₅ : absence de détection de défaut.

Dans le cas où la condition de défaut en P₂ est validée, le déclenchement (e.g. l'ouverture) en priorité des dispositifs de protection 8₁ et 8₉, lorsqu'ils détectent la présence d'un défaut, est commandé, avec une temporisation de déclenchement inférieure à la temporisation nominale, voir égale à zéro. En d'autres termes, la temporisation de déclenchement, initialement fixée à la valeur nominale T₀, est abaissée, par exemple à zéro, pour un déclenchement immédiat.

Ainsi, le mécanisme proposé accélère l'ouverture des dispositifs de protection en fonction de la validation de la condition de défaut.

Il est à noter que la règle C13) peut ne pas être mise en oeuvre dans certains modes de réalisation. En effet, si un défaut est détecté par le dispositif de protection 8₅, il est nécessaire de protéger la charge 6₁ associée, un déclenchement quasi immédiat de ce dispositif est prévu, avec une temporisation de déclenchement faible, par exemple égale à zéro. Ainsi, un déclenchement, donc une coupure, intervient avant la mise en oeuvre des règles ci-dessus au niveau du point de surveillance P₂.

De manière analogue, pour le réseau de distribution 2 illustré :

### Condition C2 de défaut associée à P₅ :

C21) -dispositif de protection 8₂ : présence de défaut dans le sens 1 ou absence de détection de défaut ;
C22) -dispositif de protection 8₉ : présence de défaut dans le sens 1 ou absence de détection de défaut ;
C23) - dispositif de protection 8₁₀ : présence de défaut dans le sens 1 ou absence de détection de défaut ;
C24) dispositif de protection 8₆ : absence de détection de défaut.

Dans le cas où la condition de défaut en P₅ est validée, le déclenchement (e.g. l'ouverture) en priorité des dispositifs de protection 8₂ 8₉ et 8₁₀, lorsqu'ils détectent la présence d'un défaut, est commandé, avec une temporisation de déclenchement inférieure à la temporisation nominale, voir égale à zéro.

### Condition de défaut C3 associée à P₇ :

C31) -dispositif de protection 8₁₀ : présence de défaut dans le sens 2 ou absence de détection de défaut ;
C32) -dispositif de protection 8₁₁ : présence de défaut dans le sens 2 ou absence de détection de défaut ;

Dans le cas où la condition de défaut en P₇ est validée, le déclenchement (e.g. l'ouverture) en priorité des dispositifs de protection 8₁₀ et 8₁₁, lorsqu'ils détectent la présence d'un défaut, est commandé, avec une temporisation de déclenchement inférieure à la temporisation nominale, voir égale à zéro.

### Condition de défaut C4 associée à P₉ :

C41) -dispositif de protection 8s : présence de défaut dans le sens 1 ou absence de détection de défaut ;
C42) -dispositif de protection 8₁₁ : présence de défaut dans le sens 1 ou absence de détection de défaut ;
C43) - dispositif de protection 8₁₂ : présence de défaut dans le sens 2 ou absence de détection de défaut ;
C44) dispositif de protection 8₇ : absence de détection de défaut.

Dans le cas où la condition de défaut en P₉ est validée, le déclenchement (e.g. l'ouverture) en priorité des dispositifs de protection 8₃, 8₁₁ et 8₁₂, lorsqu'ils détectent la présence d'un défaut, est commandé, avec une temporisation de déclenchement inférieure à la temporisation nominale, voir égale à zéro.

### Condition de défaut C5 associée à P₁₂ :

C51) -dispositif de protection 8₄ : présence de défaut dans le sens 1 ou absence de détection de défaut ;
C52) -dispositif de protection 8₁₂ : présence de défaut dans le sens 1 ou absence de détection de défaut ;
C53) dispositif de protection 8s : absence de détection de défaut.

Dans le cas où la condition de défaut en P₁₂ est validée, le déclenchement (e.g. l'ouverture) en priorité des dispositifs de protection 8₄ et 8₁₂, lorsqu'ils détectent la présence d'un défaut, est commandé, avec une temporisation de déclenchement inférieure à la temporisation nominale, voir égale à zéro.

Avantageusement, lorsqu'une condition de défaut associée à un point de surveillance est validée, le déclenchement rapide des dispositifs de protection du voisinage supprime la présence de défaut, et donc d'autres dispositifs de protection, qui détectent également une présence de défaut, ne se déclenchement pas.

De plus, le déclenchement priorisé d'un des dispositifs de protection permet de supprimer la condition de défaut, et donc d'éviter le déclenchement des autres dispositifs de protection.

Par exemple, lorsque la condition de défaut C1 est validée, le déclenchement rapide, dans la durée de déclenchement, du dispositif 8₉ permettra d'éviter le déclenchement du dispositif 8₂. En l'absence du mécanisme proposé, le dispositif de protection 8₂ se déclencherait également.

Il est également à noter que la sécurité demeure assurée, car la temporisation de déclenchement nominale T₀ reste applicable, si un défaut est détecté pendant cette durée.

Les conditions de défaut associées aux points de surveillance déterminées sont mises en oeuvre par un ou plusieurs dispositifs, de manière à assurer le déclenchement sélectif des dispositifs de protection en fonction de la validation des conditions de défaut.

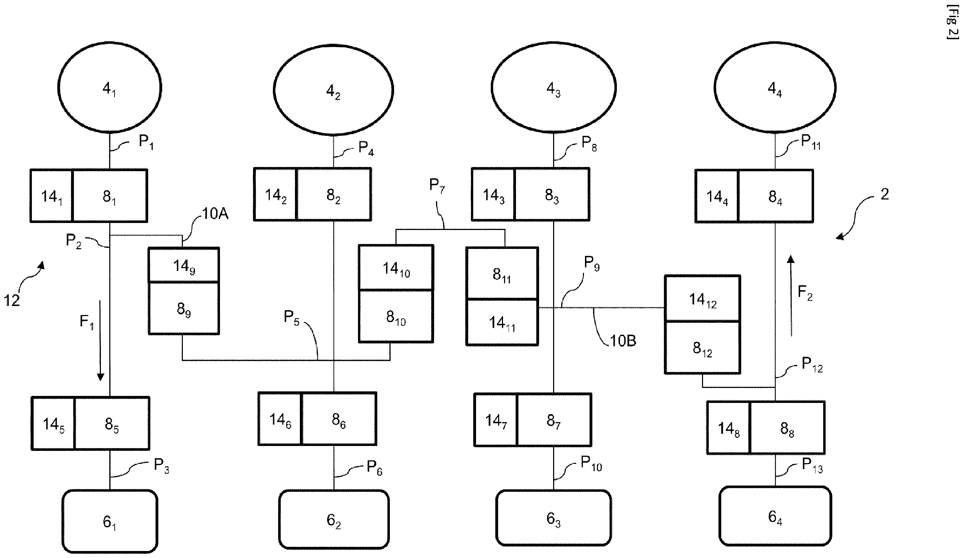

Dans un mode de réalisation, illustré dans la figure 2, un système de protection 12 est réalisé par la mise en oeuvre des conditions de défaut multi-règles associées à chaque point de surveillance du réseau de distribution 2 par des câblages entre les dispositifs de protection 8, permettant de réaliser, au niveau de chaque dispositif de protection, une mise en oeuvre, par logique câblée, de la ou des conditions de défaut multi-règles de chaque point de surveillance au voisinage duquel le dispositif de protection appartient.

Par exemple, le dispositif de protection 8₉ est dans le voisinage du point de surveillance P₂ et également dans le voisinage du point de surveillance P₅, donc via la logique câblée, les conditions de défaut C1 et C2 sont vérifiées par le dispositif de protection 8₉.

En pratique, pour vérifier une condition de défaut associée à un point de surveillance, pour chaque dispositif de protection donné, appartenant au voisinage du point de surveillance, les signaux binaires indicatifs de présence d'un courant de défaut et indicatifs du sens du courant de chaque autre dispositif de protection appartenant au voisinage du point de surveillance sont amenés, par logique câblée, en entrée dudit dispositif de protection donné.

Optionnellement, des dispositifs 14 sont associés aux dispositifs de protection 8, et configurés pour mettre en oeuvre, en coopération avec les dispositifs de protection 8, les conditions de défaut.

Les dispositifs 14 sont par exemple des modules d'interface des dispositifs de protection, également connus sous le nom de modules RIM (pour « restraint interface module »), ce qui permet d'apporter une isolation électrique pour la mise en oeuvre de plusieurs conditions de défaut.

De plus, des relais câblés à l'intérieur de chaque dispositif de protection sont également utilisés pour la mise en oeuvre des règles des conditions de défaut déterminées.

Ainsi, chaque dispositif de protection est configuré pour vérifier une ou plusieurs conditions de défaut, chaque condition de défaut étant associée à un point de surveillance au voisinage duquel appartient le dispositif de protection. Dès qu'une des conditions de défaut est vérifiée, la temporisation de déclenchement est modifiée, par exemple mise à zéro.

Avantageusement, l'utilisation de relais et de modules d'interface garantissent l'isolation électrique et la rapidité de fonctionnement.

En variante non représentée, d'autres mises en oeuvre sont envisageables, par exemple au moyen de portes logiques.

Selon une autre variante, non représentée, une carte électronique dédiée, comportant un processeur, est utilisée pour programmer la vérification des conditions de défaut multi-règles déterminées, puis en cas de détermination de défaut en un point de surveillance, commander le déclenchement prioritaire, rapide ou immédiat, avec une temporisation de déclenchement T₁ inférieure à la temporisation nominale T₀, des dispositifs de protection en fonction du point de surveillance en défaut.

Dans ce cas, une synchronisation pour assurer le déclenchement après vérification des conditions de défaut multi-règles est mise en oeuvre, dans la mesure où les informations relatives à la détection d'un défaut sont transmises de manière asynchrone.

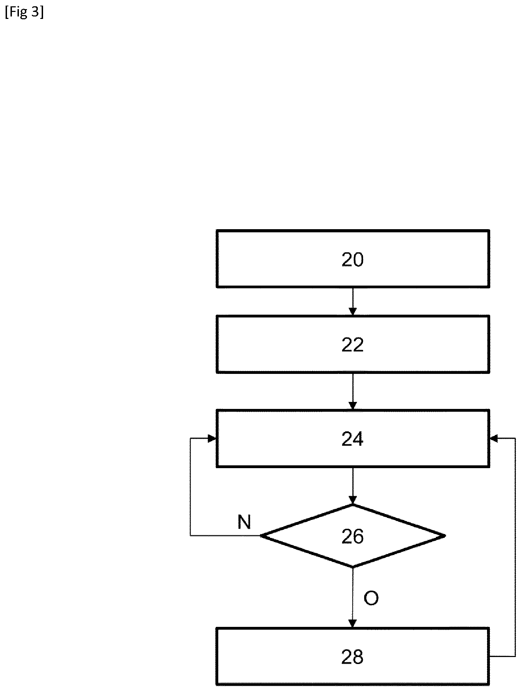

La figure 3 illustre schématiquement les principales étapes d'un procédé de protection d'un réseau de distribution électrique selon un mode de réalisation.

Le procédé comporte une étape 20 de détermination d'une pluralité de points de surveillance dans le réseau de distribution, les points de surveillance étant des points d'interconnexion, chaque point de surveillance étant connecté à au moins deux dispositifs de protection.

Le procédé comporte également une étape 22 de détermination d'une condition de défaut associée, ladite condition de défaut étant définie par une pluralité de règles relatives aux signaux indiquant la présence ou absence d'un défaut et l'indication de sens du courant associée de chaque dispositif de protection du voisinage du point de surveillance, le voisinage étant formé des dispositifs de protection directement connectés à ce point de surveillance. Pour chaque point de surveillance, la condition de défaut est définie par des règles cumulatives : pour chacun des dispositifs de protection du voisinage du point de surveillance, il y a soit : la détection d'une présence de défaut, dans le sens qui va vers le point de surveillance ou l'absence de détection de défaut.

Les étapes 20 et 22 sont des étapes préalables effectuées une fois pour un réseau de distribution d'électricité donné.

Le procédé comporte en outre une surveillance 24 de la validation d'une condition de défaut, en chaque point de surveillance, en fonction des signaux indiquant la présence ou absence d'un défaut et l'indication de sens du courant associée fournis par les dispositifs de protection du voisinage du point de surveillance.

La surveillance est effectuée par chacun des dispositifs de protection grâce à la mise en place d'une logique câblée au niveau des dispositifs de protection telle que décrite ci-dessus, ou par une programmation dédiée de carte électronique.

En cas de validation d'une condition de défaut (test de l'étape 26, réponse « oui »), le procédé comporte une commande 28 de déclenchement de l'ouverture d'un ou plusieurs dispositifs de protection, et plus spécifiquement de chaque dispositif de protection du voisinage de point de surveillance en défaut et qui alimente le courant de défaut.

Par exemple, chaque dispositif de protection, lors de la détection de présence d'un défaut, lance une temporisation nominale de durée prédéterminée, e.g. 300ms, puis vérifie la ou les conditions de défaut associées aux points de surveillance du voisinage desquels le dispositif de protection fait partie. Lorsque l'une des conditions de défaut est validée, alors la durée de la temporisation de déclenchement est raccourcie, à une durée de temporisation T₁ inférieure à T₀, ce qui provoque le déclenchement du dispositif de protection avant l'écoulement de la durée de temporisation nominale de 300ms.

## Revendications

1. Procédé de protection d'un réseau de distribution électrique comportant au moins deux sources (4₁, 4₂, 4₃, 4₄) d'énergie électrique, au moins deux barres de connexion, une pluralité de charges (6₁, 6₂, 6₃, 6₄) à alimenter étant connectées respectivement à l'une ou l'autre des barres de connexion, des dispositifs de protection (8₁-8₁₂) étant connectés, sur au moins un conducteur électrique (10A, 10B) entre les sources (4₁, 4₂, 4₃, 4₄) et les charges (6₁, 6₂, 6₃, 6₄), le courant électrique circulant soit selon un premier sens de circulation de courant (F1) des sources vers les charges, soit selon un deuxième sens de circulation de courant (F2) des charges vers les sources, chaque dispositif de protection (8₁-8₁₂) étant configuré pour passer d'un état fermé à un état ouvert, la circulation de courant électrique dans ledit au moins un conducteur étant coupée lorsque le dispositif de protection (8₁-8₁₂) est à l'état ouvert, chaque dispositif de protection (8₁-8₁₂) ayant une temporisation de déclenchement nominale et étant en outre configuré pour fournir un signal de détection d'un courant de défaut indiquant une présence ou absence de défaut détecté sur un conducteur associé en fonction d'une amplitude de courant, et une indication du sens du courant de défaut,
le procédé étant **caractérisé en ce qu'**il comporte :
une détermination (20) d'une pluralité de points de surveillance (P₁- P₁₂) dans le réseau de distribution, comprenant au moins point de surveillance connecté directement à une pluralité de dispositifs de protection, formant un voisinage dudit point de surveillance,
pour chaque point de surveillance, une détermination (22) d'une condition de défaut associée, ladite condition de défaut étant définie par une pluralité de règles relatives aux signaux indiquant la présence ou absence d'un défaut et l'indication de sens du courant associée de chaque dispositif de protection du voisinage dudit point de surveillance,
une surveillance (24) d'une validation (26) d'une condition de défaut, et lorsqu'une condition de défaut associée à un point de surveillance est validée, un déclenchement (28) prioritaire, avec une temporisation de déclenchement inférieure à la temporisation de déclenchement nominale de l'ouverture d'au moins un des dispositifs de surveillance du voisinage dudit point de surveillance en défaut.

2. Procédé selon la revendication 1, dans lequel lorsque la condition de défaut associée à un point de surveillance est validée, tous les dispositifs de protection du voisinage dudit point de surveillance qui alimentent en courant ledit point de surveillance sont déclenchés prioritairement.

3. Procédé selon la revendication 1 ou 2, dans lequel lesdites règles sont implémentées sous forme de logique câblée, de manière à déclencher ledit au moins un dispositif de protection faisant partie du voisinage d'un point de surveillance (P₂, P₅, P₇, P₉, P₁₂) lorsque l'ensemble des règles formant la condition de défaut associée audit point de surveillance est validé.

4. Procédé selon l'une des revendications 1 à 3, dans lequel, pour un point de surveillance (P₂, P₅, P₇, P₉, P₁₂), au moins une règle associée à un dispositif de protection du voisinage combine la présence d'un défaut détecté avec un sens de défaut associé ou l'absence de défaut détecté.

5. Procédé selon la revendication 4, dans lequel l'absence de défaut détecté est également représentative d'un état d'ouverture dudit dispositif de protection.

6. Procédé selon l'une des revendications 1 à 5, dans lequel pour chaque point de surveillance (P₂, P₅, P₇, P₉, P₁₂), la condition de défaut associée est définie par les règles cumulatives suivantes: pour chacun des dispositifs de protection du voisinage dudit point de surveillance, il y a soit la détection d'une présence de défaut, le sens du courant de défaut étant en direction dudit point de surveillance, soit l'absence de détection de défaut.

7. Système de protection d'un réseau de distribution électrique comportant au moins deux sources (4₁, 4₂, 4₃, 4₄) d'énergie électrique, au moins deux barres de connexion, une pluralité de charges (6₁, 6₂, 6₃, 6₄) à alimenter étant connectées respectivement à l'une ou l'autre des barres de connexion, des dispositifs de protection (8₁-8₁₂) étant connectés, sur au moins un conducteur électrique (10A, 10B) entre les sources et les charges, le courant électrique circulant soit un premier sens de circulation de courant (F1) des sources vers les charges, soit selon un deuxième sens de circulation de courant (F2) des charges vers les sources, chaque dispositif de protection (8₁-8₁₂) étant configuré pour passer d'un état fermé à un état ouvert, la circulation de courant électrique dans ledit au moins un conducteur étant coupée lorsque le dispositif de protection (8₁-8₁₂) est à l'état ouvert, chaque dispositif de protection (8₁-8₁₂) ayant une temporisation de déclenchement nominale et étant en outre configuré pour fournir un signal de détection d'un courant de défaut indiquant une présence ou une absence de défaut détecté sur un conducteur associé en fonction d'une amplitude de courant, et une indication du sens du courant de défaut,
le système étant configuré pour :
déterminer une pluralité de points de surveillance (P₁ - P₁₂) dans le réseau de distribution, comprenant au moins un point de surveillance (P₂, P₅, P₇, P₉, P₁₂) connecté directement à une pluralité de dispositifs de protection, formant un voisinage dudit point de surveillance,
pour chaque point de surveillance, déterminer une condition de défaut associée, ladite condition de défaut étant définie par une pluralité de règles relatives aux signaux indiquant la présence ou absence d'un défaut et l'indication de sens du courant associée de chaque dispositif de protection du voisinage dudit point de surveillance,
surveiller une validation d'une condition de défaut, et lorsqu'une condition de défaut associée à un point de surveillance est validée, déclencher en priorité, avec une temporisation de déclenchement inférieure à la temporisation de déclenchement nominale, l'ouverture d'au moins un des dispositifs de surveillance du voisinage dudit point de surveillance en défaut.

8. Système selon la revendication 7, dans lequel la surveillance de validation d'une condition de défaut est effectuée par une logique câblée, chaque dispositif de protection étant configuré pour vérifier une ou plusieurs conditions de défaut, chaque condition de défaut étant associée à un point de surveillance au voisinage duquel appartient ledit dispositif de protection.

9. Système selon la revendication 8, dans lequel chaque dispositif de protection donné, appartenant à un voisinage d'un point de surveillance, reçoit en entrée, via des câbles de connexion, les signaux indicatifs de présence d'un courant de défaut et indicatifs du sens du courant de chaque autre dispositif de protection appartenant audit voisinage dudit point de surveillance, chacun desdits signaux étant un signal binaire.

10. Système selon la revendication 9, dans lequel dans chaque dispositif de protection, la validation de la condition de défaut associée audit point de surveillance est implémentée, à partir desdits signaux binaires reçus en entrée, au moyen de relais internes du dispositif de protection.

11. Système selon la revendication 8 ou 9, dans lequel dans chaque dispositif de protection, la validation de la condition de défaut associée audit point de surveillance est implémentée de portes logiques.
